# EUROPÄISCHE PATENTSCHRIFT

(11) **EP 0 515 599 B1**
(45) Veröffentlichungstag und Bekanntmachung des Hinweises auf die Patenterteilung: **16.02.1994**
(21) Anmeldenummer: 91920737.3
(22) Anmeldetag: 10.12.1991
(51) Int. Cl.: A23N 1/00

(54) **VORRICHTUNG ZUR GEWINNUNG VON FRUCHTSAFT AUS ZITRUSFRÜCHTEN**
DEVICE FOR EXTRACTING THE JUICE OF CITRUS FRUIT
DISPOSITIF D'EXTRACTION DE JUS D'AGRUMES

(30) Priorität: 14.12.1990 DE 4040087
(43) Veröffentlichungstag der Anmeldung: 02.12.1992
(73) Patentinhaber: BACHMANN, Marco, CH-8044 Zürich (CH)
(72) Erfinder: BACHMANN, Marco, CH-8044 Zürich (CH)
(74) Vertreter: von Foerster, Eckard
(86) Internationale Anmeldenummer: CH9100256
(87) Internationale Veröffentlichungsnummer: WO9210108

(56) Entgegenhaltungen:
- US-A- 1 620 551
- US-A- 1 834 097
- US-A- 2 540 772
- US-A- 3 060 984

## Beschreibung

Die Erfindung betrifft eine Vorrichtung zur Gewinnung von Fruchtsaft aus eine Schale aufweisenden Zitrusfrüchten, die aus einem Vorratsbehälter einzeln in eine Verarbeitungsstation gelangen, die am Ende von Schwenkhebeln koaxial einander gegenüberstehend angeordnete sowie zwecks Veränderung ihres gegenseitigen Abstands in axialer Richtung bewegliche Halteglieder zum Erfassen und Halten einer Frucht, ein im Schwenkbereich der Halteglieder angeordnetes Messer zum Halbieren der Frucht sowie einen doppelseitigen Reibkopf zum Ausreiben der Fruchthälften aufweist.
Das Entsaften einer Zitrusfrucht unter Verwendung eines Reibkopfes ergibt sowohl hinsichtlich der Saftausbeute als auch hinsichtlich des Geschmacks des gewonnenen Safts die besten Resultate.
Ohne die Verwendung eines Reibkopfes sind auch andere Geräte für die Fruchtsaftgewinnung in grösserem Umfang mit einer einfach zu realisierenden Mechanisierung durch Herausdrücken des Saftes bekannt, und zwar werden entweder halbierte Früchte mit einer Art Stempel ausgepresst oder es werden aus der Fruchtschale einer unzerteilten Frucht Löcher herausgeschnitten und durch diese hindurch der Saft mittels mechanischem Druck auf die Schale herausgedrückt. Diese reine Druckanwendung hat jedoch den grossen Nachteil, dass aus der Schale austretende Bitterstoffe den Geschmack des Saftes beeinträchtigen. Ausserdem haften auch an der Schale aussen verschiedene, beispielsweise zur Schädlingsbekämpfung vom Menschen aufgebrachte Stoffe, die bei der Pressmethode in den Saft gelangen. Aus diesen Gründen ist das Ausreiben von Fruchthälften auch bei der Mechanisierung der Saftgewinnung unbedingt vorzuziehen.

Aus der US-Patentschrift US-A-1,620,551 ist eine Vorrichtung zum Ausreiben von Zitrus-Fruchthälften zwecks Saftgewinnung bekannt. Bei dieser Vorrichtung wird die von oben zugeführte Frucht zwischen zwei schwenkbaren und gegeneinander beweglichen Armen mit verbreiterten und Spitzen aufweisenden Enden zum Festhalten einer Frucht nach unten über ein Messer geführt und jede der dabei entstehenden Fruchthälften wird mittels der Arme gegen einen doppelseitigen Reibkopf gedrückt und ausgerieben. Mit der Vorrichtung sollen Orangen wie auch Zitronen entsaftet werden, die in der Grösse ziemlich unterschiedlich sind und aus getrennten Zufuhrkanälen mit einer jeweils zu betätigenden Sperre in einen durch federnde Klappen unten geschlossenen und an zwei Seiten offenen Schacht fallen, um durch die offenen Schacht-Seiten hindurch von den Armen erfasst zu werden. Zwischen diesen Armen muss die Frucht für das anschliessende Ausreiben möglichst genau zentriert sein und da die Orangen einen grösseren Durchmesser als die Zitronen haben, muss der Schacht bei der Verarbeitung von Orangen weiter nach unten verstellt werden, damit das Zentrum der Orange bezüglich der Mitten der Haltearmenden zentriert ist. Bei dieser Vorrichtung sind daher für die beiden verschiedenen Fruchtarten nur zwei verschiedene Einstellmöglichkeiten für den Schacht zwecks Zentrierung der jeweiligen Frucht vorhanden, für dazwischen liegende Grössen der Frucht wird die Zentrierung daher nicht möglich sein und die Maschine daher nicht funktionieren, oder mit anderen Worten lassen sich mit dieser Vorrichtung nur nach der Grösse sortierte Früchte richtig verarbeiten. Die Drehachse der die Frucht festhaltenden Arme liegt auf der Höhe des Schachtendes und oberhalb des im Abstand unter dem Schachtende horizontal angeordneten Messers, auf welches die Frucht bei der Schwenkbewegung der Arme um die Drehachse daher rechtwinklich auftrifft , so dass die Frucht mit ihrer nachgiebigen Schale über die Messerschneide gedrückt werden müsste, wenn das Messer nicht zusätzlich hin- und her bewegt würde, um eine schneidende Bewegung in die Schale hinein auszuführen. Die Vorrichtung benötigt daher ein verschiebbares Messer und eine aufwendige Anordnung von Bewegungsübertragungsgliedern für diese Messerbewegung. Ganz allgemein ist diese Vorrichtung daher ziemlich kompliziert und aufwendig konstruiert, ohne eine wirkliche Mechanisierung der Saftgewinnung aus Zitusfrüchten zu erreichen, denn der durch Betätigung von Handhebeln eingeleitete Arbeitszyklus der Vorrichtung ist nach dem Durchgang einer Frucht bereits zu Ende.

Aus der US-Patenschrift US-A-1,834,097 ist eine weitere Vorrichtung zur Saftgewinnung aus Zitrusfrüchten bekannt, mit der ebenfalls eine Frucht durchgeschnitten wird und die Fruchthälften mit Hilfe eines doppelseitigen Reibkopfes ausgerieben werden. Diese äusserst komplizierte und aufwendig gebaute Vorrichtung besitzt keine Einrichtung, die es ermöglicht, im Durchmesser verschieden grosse Früchte zu verarbeiten. Die durch eine Fördereinrichtung herantransportierten Früchte fallen in eine aus zwei parallelen Drahtschlaufen bestehende Aufnahme, wo sie von zwei am Ende von Schwenkarmen angeordneten Greifern durch deren in radialer Richtung federnd sich gegeneinander bewegende Finger erfasst werden. Im Bereich der Mitte des doppelseitigen Reibkopfes ist ein durch einen äusserst komplizierten Hebelmechanismus verschwenkbares Messer angeordnet, das nach dem Durchschneiden der Frucht wieder in seine Ausgangslage zurückkehrt. Die in den Greifern festgehaltenen Fruchthälften gelangen dann mittels der in eine zweite Schwenkstellung gebrachten und gleichzeitig weiter voneinander entfernt gehaltenen Schwenkarme vor die beiden Reibköpfe, um durch in axialer Richtung ausgeübten Druck der gegeneinander bewegten Schwenkarme ausgerieben zu werden.
Das auf- und abschwenkbare Messer braucht mit seinem komplizierten Antrieb sehr viel Platz und auserdem ist der Zeitbedarf für den Arbeitsschritt des Schneidens durch ein getrennt in Bewegung zu setzendes Messer relativ gross, im Verhältnis zur gesamten Zeitspanne eines Arbeitszyklus, der mit dem Ausstossen der leeren Schalen beendet ist.
Die Aufgabe der vorliegenden Erfindung bestand daher darin, die Frucht saftgewinnung durch Ausreiben von Zitrusfrüchten auf wesentlich einfachere Art zu mechanisieren, wobei ein wichtiger weiterer Aspekt der Aufgabe darin bestand, für diese Saftgewinnung billigere Ware verwenden zu können, welche bezüglich der Grösse unsortiert ist, was bedeutet, dass im Durchmesser grössere und kleinere Früchte durcheinander aus dem Vorratsbehälter in die Verarbeitungsstation der Vorrichtung gelangen, in welcher sie daher zwecks sauberem Ausreiben der Schalen jeweils zentriert sein müssen.

Zur Aufgabe, eine wesentlich einfacher konstruierte Vorrichtung zu schaffen, gehört ferner auch eine möglichst weitgehende Reduzierung der Anzahl separat zu bewegender Teile, insbesondere auf eine separat herbeizuführende Bewegung des Messers zu verzichten und trotzdem einen - anstatt die Fruchtschale zu quetschen - mehr ziehenden Schnitt zu erreichen.
Zur Lösung der vorgenannten Aufgaben weist die Vorrichtung die Merkmale nach Anspruch 1 auf. Der Vorteil der erfindungsgemässen Konstruktion besteht darin, dass mit einem nicht aktiv bewegten sondern nur an einem Ende schwenkbar angelenkten Messer, das mit seinem anderen Ende hochkant unterhalb der Austrittsöffnung des Vorratsbehälters federelastisch aufgehängt ist, die Zentrierung ungleich grosser Früchte in Bezug auf die Mitten der Klemmbacken durchgeführt wird, wobei die jeweilige Frucht gewichtsabhängig in unterschiedlicher Höhe und jeweils in Bezug auf die Mitten der Klemmbacken zentriert abgestützt wird. Da in dieser ersten Schwenkstellung die die Frucht festhaltenden Klemmbacken sich oberhalb des Messers befinden und die Schwenkachse der die Klemmbacken tragenden Arme unterhalb des Messers angeordnet ist, bewegen sich die Klemmbacken beim Durchschneiden der Frucht auf einem die Messerschneide spitzwinklig kreuzenden Schwenkbogen, so dass die Wirkung mehr die eines ziehendes Schnitts ist. Dadurch erübrigt es sich, das Messer aktiv zu bewegen, was die Konstruktion wesentlich vereinfacht.

Weitere Vorteile und Einzelheiten der Erfindung ergeben sich aus der nachfolgenden Beschreibung und den Zeichnungen, in denen eine Ausführungsform des Erfindungsgegenstandes rein beispielsweise dargestellt ist. Es zeigen:

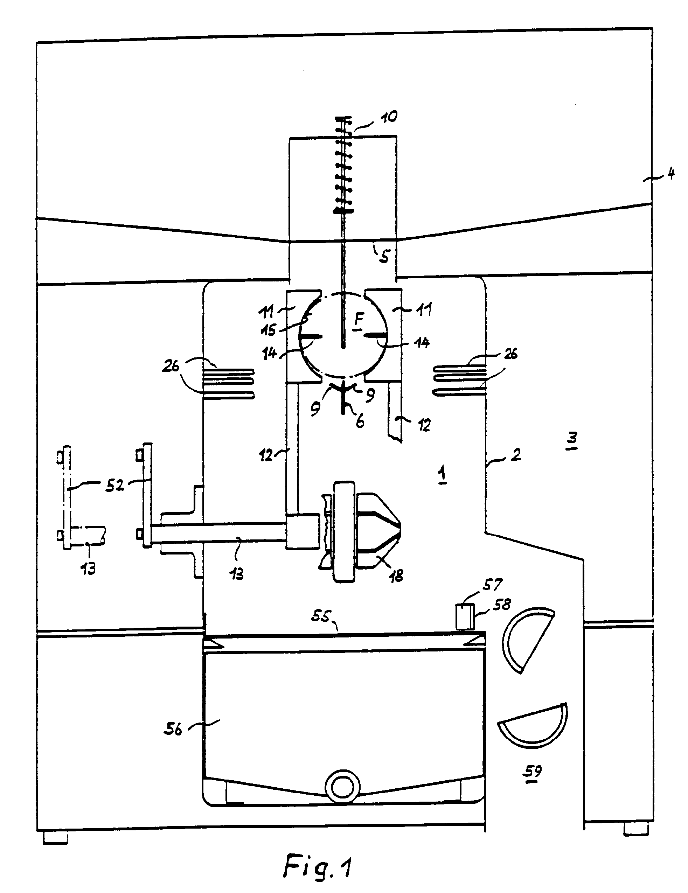

Fig. 1 eine Vorderansicht der Vorrichtung, ohne Vorderwand und schematisch dargestellt;

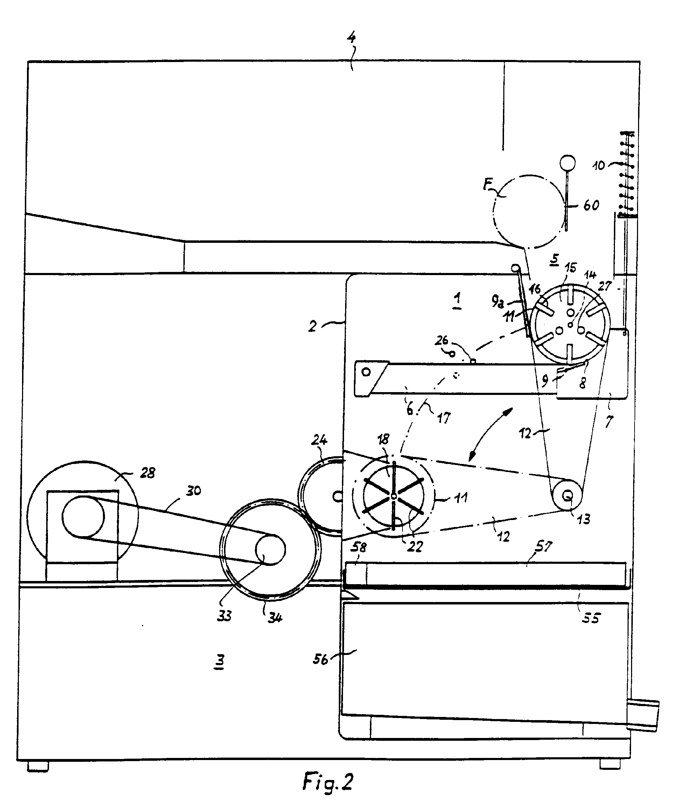

Fig. 2 die Vorrichtung in Seitenansicht;
Fig. 3 eine Draufsicht auf die Vorrichtung ohne Vorratsbehälter.

Die Vorrichtung weist eine Verarbeitungsstation 1 auf, in der die Zitrusfrüchte verarbeitet und der Saft gewonnen wird und die daher als Nasszelle durch ein Gehäuse 2 von einem an drei Seiten angrenzenden Raum 3 getrennt ist, in welchem die Antriebs- und Steuerungsmittel für die Verarbeitungsstation untergebracht sind. Oberhalb der Verarbeitungsstation 1 ist ein zur Aufnahme einer grösseren Menge von Zitrusfrüchten bestimmter Vorratsbehälter 4 mit einer im Bodenbereich befindlichen Austrittsöffnung 5 angeordnet, durch welche nacheinander jeweils eine Zitrusfrucht nach unten in die Verarbeitungsstation 1 fällt. In der Falllinie der Frucht befindet sich das eine Ende eines hochkant angeordneten Messers 6, welches an diesem Ende an einem das Messer zu beiden Seiten verbreiternden Stützkörper 7 befestigt ist, welcher nach oben hin eine viertelkreisförmige Stützfläche 8 für die Frucht und ferner unterhalb der Mitte der Frucht links und rechts je eine Stützschale 9 aufweist. Ein schwenkbeweglicher Haltearm 9a verhindert das seitliche Wegrollen der Frucht entlang der Messeroberkante. Der Stützkörper 7 ist am äusseren Ende an einer Druckfeder 10 aufgehängt, sodass das hochkant angeordnete Messer, das mit seinem anderen Ende am Gehäuse 2 der Nasszelle 1 schwenkbar angelenkt ist, in vertikaler Richtung Schwenkbewegungen ausführen kann. Das an der Feder 10 aufgehängte Messer 6 stellt sich dank der Federkennlinie der Feder immer in einer solchen Schwenkstellung ein, dass die Mitte einer auf dem Messerende und dem Stützkörper 7 sowie den Stützschalen 9 aufliegenden Frucht sich immer etwa in gleicher Höhenlage befindet, und zwar bei einer im Durchmesser kleinen und leichten Frucht ebenso wie bei einer im Durchmesser grösseren und entsprechend schwereren Frucht, bei der das Messer 6 aufgrund des Gewichts etwas nach unten schwenkt, sodass die Mitte dieser Frucht sich auf der gewünschten Höhenlage, und zwar in der Höhe des Zentrums von zwei Klemmbacken 11 befindet, die links und rechts von der Frucht in der Bereitschaftsstellung und in einem solchen Abstand voneinander gehalten sind, dass die Frucht zwischen den Klemmbacken 11 auf das Messerende fallen kann. Die Klemmbacken 11 sind jeweils an dem Ende eines Schwenkhebels 12 angeordnet, welcher mit seinem anderen Ende jeweils an einer Hebelschwenkachse 13 angeordnet ist. Jede Klemmbacke 11 besitzt im Zentrum einen Haltedorn 14, die bei den beiden Klemmbacken gegeneinander zeigen, sowie ferner an der konkav gewölbten Innenfläche 15 der Klemmbacke rippenartig etwas vorstehende radial sich erstreckende und umfangsmässig gleichmässig verteilt angeordnete Vorsprünge 16 zum Festhalten der Frucht bei dem anschliessenden Ausreiben.

Die beiden Klemmbacken 11 lassen sich mit Hilfe der beiden Hebelschwenkachsen 13 durch axiale Verschiebung derselben gegeneinander bewegen, sodass sie die dazwischen befindliche Frucht auf gegenüberliegenden Seiten erfassen und festklemmen, wobei der Haltedorn 14 der Klemmbacke 11 in die Frucht eindringt. Die beiden die Frucht festhaltenden Klemmbacken 11 lassen sich ferner durch Drehung der beiden Hebelschwenkachsen 13 verschwenken. In der ersten Schwenkstellung befinden sich die beiden Klemmoacken 11 senkrecht über den beiden Hebelschwenkachsen 13. Beim Verschwenken der beiden die Frucht festhaltenden Klemmbacken 11 durch Drehung der beiden Hebelschwenkachsen 13 kreuzt der Schwenkbogen 17 der Klemmbacken unter einem spitzen Winkel das Messer 6, was den Schneidvorgang mit der gleichen Wirkung wie ein ziehender Schnitt mit wenig Widerstand durchzuführen erlaubt.

An der rückseitigen oder inwendigen Gehäusewand 2 der Nasszelle ist ferner ein doppelseitiger Reibkopf 18 drehbar angeordnet. Der Reibkopf 18 liegt auf dem Schwenkbogen 17 der Klemmbacken 11, die bei Erreichen des Reibkopfes einen Viertelkreisbogen zurückgelegt haben. Während dieser Schwenkbewegung fahren die Klemmbacken durch axiale Verschiebung der zugehörigen Hebelschwenkachsen 13 soweit auseinander, dass die beiden Klemmbacken 11 mit je einer darin gehaltenen Fruchthälfte zu beiden Seiten und mittig vor dem doppelseitigen Reibkopf 18 sich befinden. In dieser zweiten Schwenkstellung werden die beiden Klemmbacken 11 dann durch axiale Verschiebung der Hebelschwenkachsen 13 gegen den rotierenden Reibkopf 18 angedrückt, sodass beide Fruchthälften gleichzeitig ausgerieben werden. Der Reibkopf 18 besitzt zu diesem Zweck zwei auf einer zentralen Achse 20 im Abstand voneinander angeordnete Naben 21, die jeweils radial angeordnete Flügelscheiben 22 mit einer bogenförmigen Aussenkontur zum Ausreiben tragen. Auf der Achse 20 ist zwischen den beiden Naben 21 ein Zahnrad 23 angeordnet, welches mit einem durch die Wand des Gehäuses 2 der Nasszelle greifenden weiteren Zahnrad 24 in Eingriff steht. Die anschliessend noch näher beschriebenen Antriebsmittel befinden sich ausserhalb des die Bearbeitungsstation und Nasszelle 1 umschliessenden Gehäuses 2.

Die Nabe 21 für die Achse 20 des Reibkopfes 18 ist an einem zum Umschliessen der beiden Zahnräder 23 und 24 gehäuseartig ausgebildeten Haltearm 25 befestigt, welcher an der rückwärtigen Wand des Gehäuses 2 angeflanscht ist.

Das im Grundriss rechteckförmige Gehäuse 2 weist ferner an zwei gegenüberliegenden Wänden, welche an die den Reibkopf tragende Gehäusewand rechtwinklig anschliessen, jeweils drei auf einem Kreis angeordnete Auswerferstifte 26 auf, die von der Wand senkrecht vorstehen und sich auf der Linie des Schwenkbogens 17 der beiden Klemmbacken 11 befinden. Die Klemmbacken 11 weisen jeweils drei Durchgangsbohrungen 27 auf, die auf einem Kreis um das Zentrum der Klemmbacke und mit den Auswerferstiften korrespondierend so ausgebildet sind, dass durch Bewegung der Klemmbacke in Richtung gegen die Gehäusewand die Auswerferstifte 26 durch die Durchgangsbohrungen 27 hindurchtreten, um nach dem Ausreiben der beiden Hälften der Frucht die Schale aus der Klemmbacke auszustossen, was in einer dritten Schwenkstellung der Klemmbacken während einer kurzen Unterbrechung der Schwenkbewegung von der zweiten Schwenkstellung der Klemmbacken vor dem Reibkopf in die erste Schwenkstellung oder Ausgangsstellung der Klemmbacken oberhalb des Messerendes erfolgt, wobei in dieser dritten Schwenkstellung jede der Klemmbacken durch axiale Verschiebung der zugeordneten Hebelschwenkachse 13 in Querrichtung bewegt wird.

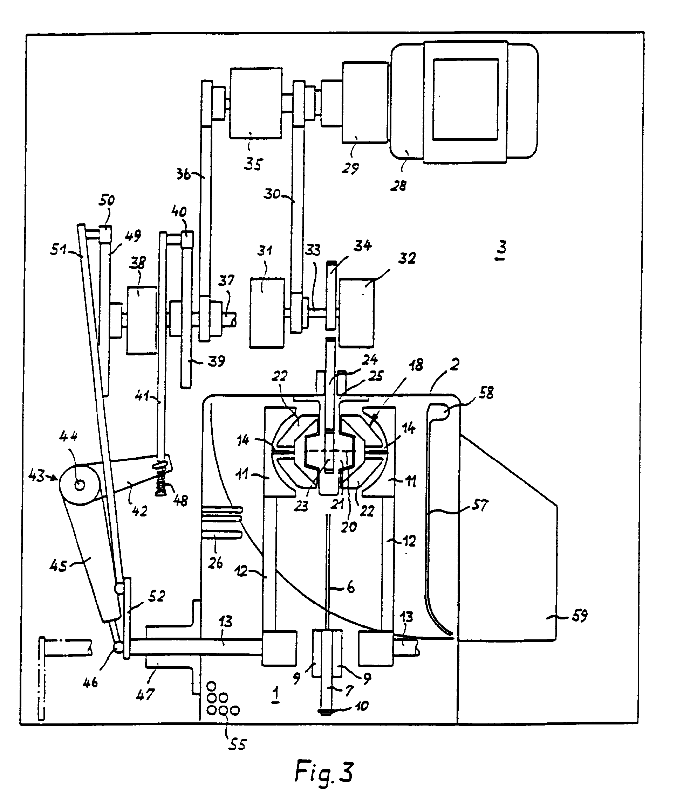

Alle Bewegungen der beiden Klemmbacken 11 erfolgen durch die Antriebs- und Steuerungsmittel, die in dem die Nasszelle 1 im Grundriss U-förmig umschliessenden Raum 3 angeordnet sind, wie aus Fig. 3 hervorgeht. Ein Elektromotor 28 treibt ein angebautes Untersetzungsgetriebe 29, durch welches ein Riementrieb 30 angetrieben wird, durch welches eine in zwei Stehlagern 31 und 32 gelagerte Welle 33 angetrieben wird, die ein Zahnrad 34 trägt, welches über die beiden bereits erwähnten Zahnräder 24 und 23 den doppelseitigen Reibkopf 18 mit einer zum Ausreiben geeigneten Drehzahl antreibt. Die Drehzahl beträgt vorzugsweise 500 Umdrehungen pro Minute.

Ein dem ersten Untersetzungsgetriebe 29 nachgeschaltetes weiteres Untersetzungsgetriebe 35 treibt über einen weiteren Riementrieb 36 eine Welle 37 an, die in zwei Stehlagern 38 gelagert ist. In Fig. 3 ist nur ein Stehlager 38 dargestellt und ist der weitere Bewegungsantrieb nur für die linke Klemmbacke 11 dargestellt, da der nicht gezeigte Bewegungsantrieb für die rechte KLemmbacke 11 die gleichen Teile umfasst und spiegelbildlich gleich ausgebildet ist. Auf der abgebrochen dargestellten Welle 37 befindet sich eine erste Kurvenscheibe 39, die mit einer Nockenrolle 40 am Ende eines Übertragungshebels 41 zusammenarbeitet. Dieser Hebel 41 ist am Ende des einen Hebelarms 42 eines zweiarmigen Kniehebels 43 angelenkt, der auf einer vertikalen Achse 44 schwenkbar gelagert ist und dessen anderer Hebelarm 45 am Ende einen Gelenkkopf 46 trägt, der die Verbindung zur Hebelschwenkachse 13 bildet. Diese ist in einem an dem Gehäuse 2 angeflanschten Lager 47 längsverschieblich gelagert, um den Abstand der beiden Klemmbacken 11 für die verschiedenen Operationen jeweils zu verändern. Diese Bewegung der Klemmbacken 11 in axialer Richtung wird also durch die Kurvenscheibe 39 gesteuert und da, wie eingangs erwähnt wurde, mit der Vorrichtung im Durchmesser kleinere wie auch grössere Zitrusfrüchte verarbeitet werden sollen, ist die Kurvenscheibensteuerung so ausgelegt, dass in den verschiedenen Schwenkstellungen beim Ergreifen einer Frucht und beim Ausreiben die Frucht mit dem kleinsten Durchmesser festgehalten wird, sodass die beiden Klemmbacken 11 bei einer Frucht mit einem grösseren Durchmesser weniger dicht zusammenfahren dürfen, wenn die Frucht nicht zerquetscht werden soll, weshalb in den starren Bewegungsübertragungsgliedern ein elastisches Element in Form einer Feder 48 zwischen dem Übertragungshebel 41 und dem Kniehebel 43 angeordnet ist, welche Feder bei der Bearbeitung einer Zitrusfrucht mit einem grösseren Durchmesser zusammengedrückt wird.

Der Gelenkkopf 46 am Ende der Hebelschwenkachse 13 ermöglicht, dass diese Achse gleichzeitig auch gedreht werden kann, damit die Klemmbacke 11 die verschiedenen Schwenkstellungen einnehmen kann. Die Veränderung der Schwenkstellung wird durch eine auf der gleichen Welle 37 angeordnete weitere Kurvenscheibe 49 gesteuert, die mit einer Nockenrolle 50 am Ende eines Übertragungshebels 51 zusammenarbeitet, der an einem an der Hebelschwenkachse 13 angeordneten weiteren Hebel 52 angelenkt ist und mit diesem zusammen eine Kurbel bildet, mittels welcher die Hebelschwenkachse zwischen einer ersten und einer zweiten Schwenkstellung hin- und herverschwenkt wird. In Fig. 3 ist eine. dieser Schwenkstellungen in ausgezogenen Linien und eine weitere Schwenkstellung in strichpunktierten Linien dargestellt.

Die beiden Kurvenscheiben 39 und 49 steuern sämtliche Bewegungen der Klemmbacken 11 während des gesamten Bewegungsablaufs beim Halbieren und Ausreiben einer Zitrusfrucht, d.h. die Bewegung zum Festhalten einer aus dem Vorratsbehälter herabfallenden Zitrusfrucht zwischen den Klemmbacken, die Schwenkbewegung über das Messer 6 zum Halbieren der Frucht, die Bewegungen der Klemmbacken gegen den Reibkopf 18 und von diesem wieder zurück, die anschliessende Schwenkbewegung und axiale Bewegung gegen die Auswerferstifte 26 und die anschliessende Schwenkbewegung in die Ausgangsstellung zurück.

Beim Ausreiben der Zitrusfrucht gelangt der Saft nach unten durch einen die Nasszelle 1 unten abschliessenden Siebboden 55 in einen darunter befindlichen und herausnehmbaren Saftbehälter 56. Auf dem Siebboden 55 bleibt die ausgeriebene Pulpe liegen, die in regelmässigen Zeitabständen mit Hilfe eines über den Siebboden 55 fahrenden Wischerarms 57 seitlich wegbefördert wird. Der Wischerarm 57 ist um eine in einer Ecke des Siebbodens 55 angeordnete senkrechte Drehachse 58 parallel zum Siebboden hin- und herschwenkbar. In der in Fig. 3 gezeichneten Stellung hat der Wischerarm 57 die Pulpe bis zu einem an die Nasszelle 1 seitlich angrenzenden Austrittsschacht 59 geschooen, durch welchen Schacht die Pulpe in einen nicht dargestellten Behälter senkrecht nach unten fällt. Der Wischerarm 57 bewegt sich bis vor die Gehäusewand 2 unterhalb des Reibkopfes 18 und ist während dieser Schwenkbewegung mit Hilfe einer nicht dargestellten Nockensteuerung angehoben, damit die Pulpe während dieser Bewegungsphase nicht mitgenommen wird und nur während der Bewegung in der entgegengesetzten Richtung in den Schacht 59 gelangt. Über diesen Schacht 59 werden auch die ausgeriebenen und auf den Siebboden fallenden Schalen der Zitrusfrüchte wegbefördert.

Zu dieser Vorrichtung gehört ferner eine hier nicht näher beschriebene Steuer- und Regeleinrichtung, die für den richtigen Ablauf der einzelnen Bewegungen in einem Bearbeitungszyklus sorgt, beispielsweise eine schwenkbare Sperre 60 im Bereich der Austrittsöffnung 5 des Vorratsbehälters 4 nur dann entriegelt, um eine weitere Zitrusfrucht für den Weg nach unten freizugeben, wenn die Klemmbacken 11 sich in der Ausgangsstellung befinoen, in der sie eine Frucht zwischen sich festhalten können. Die hier nicht weiter beschriebene Regeleinrichtung umfasst auch an verschiedenen Stellen der Vorrichtung angeordnete Schaltglieder, die beispielsweise bei Verstopfung durch leere Schalen einen Maschinenstop auslösen.

## Patentansprüche

1. Vorrichtung zur Gewinnung von Fruchtsaft aus eine Schale aufweisenden Zitrusfrüchten, die aus einem Vorratsbehälter (4) einzeln in eine Verarbeitungsstation (1) gelangen, die am Ende von Schwenkhebeln (12) koaxial einander gegenüberstehend angeordnete sowie zwecks Veränderung ihres gegenseitigen Abstands in axialer Richtung bewegbare Halteglieder (11) zum Erfassen und Halten einer Frucht, ein im Schwenkbereich der Halteglieder angeordnetes Messer (6) zum Halbieren der Frucht sowie einen doppelseitigen Reibkopf (18) zum Ausreiben der Fruchthälften aufweist, dadurch gekennzeichnet, dass das Messer (6) an seinem einen Ende mit Stützkörpen (7,9) zum Halten einer auf diese aus dem Vorratsbehälter (4) fallenden Frucht ausgestattet und mit diesem Ende hochkant in der Fallinie der Austrittsöffnung (5) des Vorratsbehälters (4) und mittig zwischen den Unterkanten der in ihrer ersten Schwenkstellung befindlichen beiden, als Klemmbacken (11) ausgebildeten Haltegliede - zwecks Zentrierung jeder der auf den Stützkörpern am Messerende auftreffenden Früchte bezüglich der Mitten der Klemmbacken (11) - am Gehäuse (2) der Verarbeitungsstation (1) federelastisch abgestützt ist, und dass die Drehachsen (13) der die Klemmbacken (11) tragenden Schwenkhebel (12) im Abstand unterhalb des im wesentlichen waagerecht angeordneten und mit dem anderen Ende am Gehäuse (2) schwenkbar gelagerten Messers (6) im Gehäuse um eine gemeinsame Achse drehbar und axial verschiebbar gelagert sind, derart, dass die Klemmbacken (11) von der genannten ersten Schwenkstellung längs eines das Messer unter einem spitzen Winkel kreuzenden Schwenkbogens (17) in eine zweite Schwenkstellung bewegbar sind, in der die Fruchthälften mittels der an den in axialer Richtung verschiebbaren Drehachsen (13) angeordneten Klemmbacken gegen den unterhalb des Messers angeordneten, rotierend antreibbaren Reibkopf (18) andrückbar sind.

2. Vorrichtung nach Anspruch 1, dadurch gekennzeichnet, dass die Abstützung des Messers (6) am Gehäuse (2) als eine Feder (10) aufweisende Aufhängung ausgebilldet ist, die eine vom Gewicht der Frucht abhängige Schwenkverstellung des Messers (6) in einer senkrechten Ebene zwecks Zentrierung von im Durchmesser unterschiedlich grosser Früchte in bezug auf die Mitten der Klemmbacken (11) bewirkt.

3. Vorrichtung nach Anspruch 1, dadurch gekennzeichnet, dass das Gehäuse (2) der das Messer (6), den Reibkopf (18) sowie die Klemmbacken (11) aufweisenden Verarbeitungsstation (1) an den einander gegenüberliegenden Innenseiten fest angeordnete Auswerferstifte (26) aufweist, gegen welche jede der beiden mit entsprechenden Durchgangsbohrungen (27) für die Auswerferstifte versehenen Klemmbacken (11) in einer zwischen den beiden genannten Schwenkstellungen liegenden dritten Schwenkstellung durch zusätzliche Querbewegung anfahren, um die in den Klemmbacken befindlichen ausgeriebenen Fruchthälften auszustossen.

4. Vorrichtung nach Anspruch 1, dadurch gekennzeichnet, dass jede der im Gehäuse (2) gelagerten und in entgegengesetzten Drehrichtungen bewegbaren Drehachsen (13) der je eine Klemmbacke (11) tragenden Schwenkhebel (12) an dem ausserhalb des Gehäuses befindlichen Ende über einen Gelenkkopf (46) mit dem einen Hebelarm (45) eines schwenkbar gelagerten, zweiarmigen Winkelhebels (43) in Verbindung steht, dessen anderer Hebelarm (42) zwecks Axialverschiebung der Drehachse mittels eines Uebertragungshebels (41) und einer diesen Hebel bewegenden, drehend angetriebenen Kurvenscheibe (39) hin- und herschwenkbar ist, und dass der Uebertragungshebel (41) und der Hebelarm (42) des Winkelhebels (43) mittels eines elastischen Federglieds (48) gekuppelt sind, um unterschiedlich grosse Durchmesser aufweisende Früchte ohne deren Zerstörung zwischen den Klemmbacken (11) festklemmen sowie ausreiben zu können.

5. Vorrichtung nach Anspruch 4, dadurch gekennzeichnet, dass jede der Drehachsen (13) an dem ausserhalb des Gehäuses (2) befindlichen Ende ferner mit einem eine Kurbel bildenden Hebelpaar (51,52) verbunden ist, von dem der eine Hebel (51) zwecks Drehung der Drehachse (13) in entgegengesetzten Drehrichtungen mittels einer weiteren Kurvenscheibe (49) bewegbar ist, welche auf einer auch die Kurvenscheibe (39) für die Axialverschiebung tragenden, motorgetriebenen gemeinsamen Welle (37) angeordnet ist.

6. Vorrichtung nach Anspruch 5, dadurch gekennzeichnet, dass mittels der gemeinsamen Antriebswelle (37) sowie mittels von zu beiden Seiten einer durch die Mitte des Gehäuses (2) und des Reibkopfes (18) verlaufenden Symmetrielinie spiegelbildlich angeordneter Winkelhebel (43) und Uebertragungshebel (41) für die Axialverschiebung sowie - je eine Kurbel bildender - Hebelpaare (51,52) für die Drehbewegung beide, die Klemmbacken tragenden Drehachsen (13) synchron bewegbar sind.

7. Vorrichtung nach Anspruch 3, dadurch gekennzeichnet, dass auf dem als Siebboden (55) ausgebildeten Gehäuseboden der Verarbeitungsstation ein zum Wegschieben der ausgeriebenen Pulpe bestimmter Wischerarm (56) um eine in einer Bodenecke angeordnete senkrechte Drehachse (57) parallel zum Siebboden längs eines Kreisbogens hin- und herschwenkbar ist, der während einer der beiden Schwenkbewegungen angehoben ist.

## Claims

1. Apparatus for extracting fruit juice from citrus fruits which have a rind, which arrive from a supply container (4) in a processing station (1) which includes at the end of pivot arms (12) holding members (11) adapted to grip and hold one fruit, which holding members are located coaxially opposite of each other and are movable in an axial direction, and includes a knife (6) for bisecting a fruit being arranged in the moving path of the holding members, and includes a double rasping head (18) for rasping out bisected fruits, characterized in that said knife (6) on its one end has supporting members (7,9) for receipt and holding of a fruit falling out of a discharge opening of the supply container (4) onto said supporting members, said knife with said one end being arranged in an upstandung state in the drop line of the discharge opening (5) of the supply container (4) and centrally between the low edges of said two holding members (11) being structured as clamping jaws and being in the first pivotal position for gripping and holding a fruit, said knife end further being supported at the housing (2) in a spring elastic manner in order to position each fruit falling on said supporting members (7,9) centrally relative to the centers of the clamping jaws (11), the lever pivot axes (13) of said pivot arms (12) supporting said clamping jaws being journaled rotatable around a common axis and displaceable in the housing (2) at a distance below the knife - being substancially horizontally arranged and with its other end pivotally supported at the housing-, such that the clamping jaws (11) are movevable from the first pivotal position along an arc of pivoting movement intersecting the knife at an acute angle to the second pivotal position, in which the halves of the fruit are adapted to be pressed by means of the in axial direction displaceable clamping jaws against the double side rasping head (18) being located below the knife.

2. Apparatus of claim 1, characterized in that the supporting of the knife (6) on the housing (2) is structured as a spring suspension (10) which causes a pivoting displacement of the knife in a vertical plane depending from the weight of the fruit in order to position fruits having different diameters centrally relativ to the centers of the clamping jaws (11).

3. Apparatus of claim 1, characterized in that ejector pins (26) are located rigidly inside at opposite walls of the housing (2) of the processing station (1) including the knife (6),the rasping head (18) and the clamping jaws(11), against which ejector pins the two clamping jaws which have corresponding through bores (27) for the ejector pins are displaceable in a third pivotal position positioned between the second and the first position by an additional lateral movement in order to eject the rubbed out fruit halves located in the clamping jaws.

4. The apparatus of claim 1, characterized in that each of the lever pivot axes (13), each having a pivot arm (12) at which the clamping jaw (11) is positioned, is supported for rotation in opposite directions in the housing (2) and has an end outside the housing which is connected via a joint head (46) to one lever arm (45) of a pivotable supported double-arm angular lever (43), of which the other lever arm (42) - for longitudinal displacement of the lever pivot axis - is pivotable via a transmitting lever (41) by means of a cam disk (39), said other lever arm (42) of said angular lever (43) and said transmitting lever (41) being connected by means of a spring element (48) in order that fruits having different diameters can be clamped between the clamping jaws (11) and rasped out without being destroyed.

5. Apparatus of claim 4, characterized in that each of the lever pivot axes (13) is connected with its end outside the housing (2) further to a pair of levers (51,52) forming a crank,of which one of said levers (51) -for rotation of the pivot axis (13) in opposite directions- is adapted to be moved by a further cam disk (49) which is located on the same motor driven shaft (37) supporting the cam disk(39)for axial displacement.

6. Apparatus of claim 5, charakterized in that both lever pivot axes (13) each having a clamping jaw (11) are movable synchronously by means of the common shaft (37) and by means of angular levers (43) and transmitting levers (41) for the axial displacement and pairs of levers (51,52) forming a crank being arranged in a mirror like manner relative to a line of symmetry extending through the center of the housing (2) and the rasping head (18).

7. Apparatus of claim 3, characterized in that a wiper blade (56) is located on the floor (55) of the housing (2) structured as screen floor (55) and adapted to wipe the rubbed out pulp off, which wiper blade is reciprocally pivotable around a vertical rotating axis (57) located in a corner of the floor, which wiper blade (56) is lifted during one of the two pivotal movements.

## Revendications

1. Appareil d'extraction de jus d'agrumes présentant une pelure, qui arrivent un à un depuis un réservoir d'alimentation (4) à un poste de traitement (1), qui présente des éléments de maintien (11) disposés coaxialement l'un au dessus de l'autre et pouvant se déplacer en direction axiale afin de modifier leurs distances mutuelles, destinés à saisir et à maintenir un fruit, un couteau (6) monté dans la zone de pivotement des éléments de maintien et destiné à diviser le fruit, ainsi qu'une tête d'extraction par frottement double (18) destinée à extraire le jus des demi-fruits, caractérisé en ce que le couteau (6) est équipé, à l'une de ses extrémités, d'éléments de support (7, 9) destinés à maintenir un fruit tombant sur ceux-ci, depuis le récipient d'alimentation (4) et avec deux éléments de maintien en forme de mâchoires de serrage (11) se trouvant avec cette extrémité verticalement dans la ligne de chute de l'orifice de sortie (5) du réservoir (4) et au milieu, entre les bords inférieurs des deux éléments de maintien en forme de mâchoire de serrage se trouvant dans leur première position de pivotement afin de centrer chacun des fruit arrivant à l'extrémité du couteau sur les pièces de support par rapport au milieu des mâchoires de serrage (11) supportées élastiquement sur le boîtier (2) du poste de traitement (1), et en ce que les axes de rotation (13) des leviers de pivotement (12) portant les mâchoires de serrage (11) sont disposés à distance en dessous du couteau (6) placé en position essentiellement horizontale et montés à pivot par son autre extrémité sur le boîtier (2) dans le boîtier, avec possibilité de rotation autour d'un axe commun et de déplacement axial, de façon que les mâchoires de serrage (11) puissent se déplacer depuis ladite première position de pivotement le long d'un arc de pivotement (17) croisant le couteau suivant un angle aigu, jusqu'à une deuxième position de pivotement dans laquelle les moitiés de fruits peuvent être pressées par les mâchoires de serrage montées sur les axes de pivotement (13) pouvant coulisser en direction axiale contre la tête d'extraction par frottement (18) pouvant être entraînée et mise en rotation et située en dessous du couteau.

2. Dispositif selon la revendication 1, caractérisé en ce que le support du couteau (6) dans le boîtier (2) est constitué par une suspension présentant un ressort (10) qui provoque un mouvement de pivotement du couteau (6), en fonction du poids du fruit, dans un plan vertical afin de centrer les fruits de diamètres différents par rapport au centre des mâchoires de serrage (11).

3. Dispositif selon la revendication 1, caractérisé en ce que le boîtier (2) du poste de traitement (1) comportant le couteau (6), la tête d'extraction (18) ainsi que les mâchoires de serrage (11), présente, sur les côtés intérieurs opposés l'un à l'autre, des broches d'éjection (26) à montage fixe, contre lesquelles chacune des deux mâchoires de serrage (11) pourvues de trous de passage correspondant (27) pour les broches d'éjection, peuvent se rapprocher dans une troisième position de pivotement située entre les deux positions de pivotement précités, par un mouvement de déplacement transversal supplémentaire afin d'éjecter les moitiés de fruits dont le jus a été extrait et qui se trouvent dans les mâchoires de serrage.

4. Dispositif selon la revendication 1, caractérisé en ce que chacun des axes de pivotement (13), monté dans le boîtier (2) et pouvant se déplacer dans des sens de rotation opposés des leviers de pivotement (12) supportant chacun une mâchoire de serrage (11), sont assemblés à l'extrémité se trouvant en dehors du boîtier par une tête d'articulation (46) à un bras de levier (45) d'un levier coudé (43) à deux bras montés à pivot, dont l'autre bras de levier (42) peut pivoter en avant et en arrière afin de déplacer axialement l'axe de pivotement au moyen d'un levier de transmission (41) et d'un disque de came (39) mis en rotation et déplaçant ce levier et en ce que le levier de transmission (41) et le bras de levier (42) du levier coudé (43) sont accouplés au moyen d'un élément élastique (48) afin de pouvoir serrer des fruits présentant des diamètres différents sans provoquer leur destruction entre les mâchoires de serrage et afin d'extraire leur jus de cette manière.

5. Dispositif selon la revendication 4, caractérisé en ce que chacun des axes de pivotement (13) est assemblé, en outre, à l'extrémité se trouvant en dehors du boîtier (2) à une paire de leviers (51, 52) formant un vilebrequin dont un levier (51) peut se déplacer par pivotement de l'axe de rotation (13) dans des sens de rotation opposés, au moyen d'un autre disque de came (49) qui est disposé sur un arbre commun (37) entraîné par moteur et portant également le disque de came (39) pour le déplacement axial.

6. Dispositif selon la revendication 5, caractérisé en ce que les deux axes de rotation (13) portant les mâchoires de serrage, peuvent être mis en mouvement au moyen de l'arbre d'entraînement commun (37) ainsi qu'au moyen d'un levier coudé (43) et d'un levier de transmission (41) pour le déplacement axial, disposés symétriquement des deux côtes d'une ligne de symétrie passant par le milieu du boîtier (2) et de la tête d'extraction (18), ainsi que d'une paire de leviers (51, 52) formant un vilebrequin pour le mouvement de rotation.

7. Dispositif selon la revendication 3, caractérisé en ce que le fond du boîtier du poste de traitement en forme de fond à tamis (55) comporte un bras de balayage (56) destiné à évacuer la pulpe extraite et pouvant pivoter d'un mouvement de va et vient parallèlement au fond à tamis suivant un arc de cercle autour d'un axe de rotation (57) disposé perpendiculairement dans un angle du fond, ledit bras de balayage étant soulevé pendant l'un des deux mouvements de pivotement.
